# EUROPEAN PATENT APPLICATION

(11) **EP 4 838 385 A1**
(43) Date of publication of application: **11.11.2026**
(21) Application number: 25212528.1
(22) Date of filing: 30.10.2025
(51) Int. Cl.: G06F 16/955, G06F 16/957

(54) **XR-SPECIFIC UCI ENCODING AND MULTIPLEXING PROCEDURES**

(30) Priority: 06.05.2025 US 202563800958 P
(71) Applicant: GOOGLE LLC, Mountain View CA 94043 (US)
(72) Inventor: CHITNIS, Laukik Vilas, Mountain View, 94043 (US); WENG, Zhenbin, Mountain View, 94043 (US); ZENG, Caren, Mountain View, 94043 (US); GROVER, Rushil, Mountain View, 94043 (US); TIAN, Yunke, Mountain View, 94043 (US); LUKOSE, Deepak, Mountain View, 94043 (US); TATAVARTHI, Krishna Kanth, Mountain View, 94043 (US); KUMAR, Niraj, Mountain View, 94043 (US); TICKOO, Ashish, Mountain View, 94043 (US); JANE, Adrian Jeremy, Mountain View, 94043 (US); YIN, Hang, Mountain View, 94043 (US); JAIN, Alpa, Mountain View, 94043 (US); CHEN, Jason, Mountain View, 94043 (US); JANG, Jing-Tang Keith, Mountain View, 94043 (US)
(74) Representative: Marks & Clerk GST

(57) **Abstract**

Methods, systems, and apparatus, including computer programs encoded on a computer storage medium, for dynamic landing page modification. A set of candidate uniform resource locators of web pages are obtained. Content elements are extracted from a web page. Based on an evaluation of the content elements, one or more of the content elements are determined eligible for inclusion in a given digital component. The content elements deemed eligible for inclusion in the given digital component are stored with an account identifier of an account corresponding to the given digital component. The given digital component is selected for distribution. A modified digital component is created using the given digital component and at least one content element from the elements database that was not already included in the given digital component. The modified digital component is distributed as a response to a search query.

## Description

### BACKGROUND

The present disclosure relates to data processing, and in some aspects, dynamically modifying a destination universal resource locator associated with a digital component.

As Internet usage has grown, so has the number of web pages providing information. Often, content that is presented to users on a web page will include links that redirect users to a specified universal resource locator. However, a static universal resource locator may not adequately address the needs of all users.

### SUMMARY

In general, one innovative aspect of the subject matter described in this specification can be embodied in methods that include the actions of obtaining, by a service system including one or more hardware processors, a set of candidate uniform resource locators of web pages included in a same second level domain as a display uniform resource locator (URL) that is pre-specified for a given digital component, wherein the given digital component includes variable content that is capable of being modified prior to distribution to a client device; extracting, by the service system, content elements from a given web page located at a given candidate uniform resource locator among the set of candidate uniform resource locators; determining, by the service system and based on an evaluation of the content elements, one or more of the content elements corresponding to the given web page that are eligible for inclusion in the given digital component; storing, by the service system, the one or more content elements that are eligible for inclusion in the given digital component based on the evaluation in a content elements database with an account identifier of an account for which the given digital component is distributed; after storing the one or more content elements in the content elements database: receiving, by the service system, a search query submitted by a client device; selecting, by the service system, the given digital component for distribution based on the search query matching a distribution keyword used to distribute the given digital component; creating, by the service system, a modified digital component using the given digital component, wherein the modified digital component includes: at least one content element from the elements database that was not already included in the given digital component; and the display URL; and distributing the modified digital component to the client device as a response to the search query. Other embodiments of this aspect include corresponding systems, apparatus, and computer programs, configured to perform the actions of the methods, encoded on computer storage devices.

These and other embodiments can each optionally include one or more of the following features. Methods can include detecting interaction with the modified digital component based on interaction data received from the client device; determining a destination URL that differs from the display URL included in the modified digital component based at least in part on the interaction data; redirecting the client device to the destination URL rather than the display URL.

Determining the destination URL can include detecting data specifying one or more of the account identifier or the at least one content element of the modified digital component; searching the content elements database using the one or more of the account identifier or the at least one content element of the modified digital component; and selecting, as the destination URL, a given URL that is keyed to the one or more of the account identifier and the at least one content element of the modified digital component.

Methods can include prior to receiving the search query submitted by the client device, obtaining a feature vector of the given URL; after receiving the search query submitted by the client device, computing a similarity measure between the feature vector of the given URL and a query vector representing the search query, wherein selecting the given URL is based on at least the similarity measure between the feature vector of the given URL and the query vector.

Methods can include identifying multiple different candidate content elements from the given web page; creating different combinations of the different candidate content elements from the given web page; evaluating a relevance of each of the different combinations of the different candidate content elements to the given web page as a whole based on a combination feature vector; selecting a proper subset of the different combinations as eligible combinations of content elements that are eligible to be included together in a same modified digital component; and storing the eligible combinations of content elements in the elements database with the account identifier of the account.

Methods can include after receiving the search query: identifying an account group having one or more distribution keywords matching the search query; and selecting a given eligible combination of content elements based on the search query and an account group identifier, wherein creating the modified digital component comprises modifying the given digital component using the combination of content elements.

Creating the modified digital component can include using the combination of content elements to modify a text headline and text description of the given digital component.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in content is distributed.
FIG. 2 is a block diagram illustrating a system for implementing dynamic URL modification.
FIG. 3 is a flow chart of an example process for dynamic URL modification.
FIG. 4 is a block diagram of an example computer system.

Like reference numbers and designations in the various drawings indicate like elements.

### DETAILED DESCRIPTION

This specification is related to a system that dynamically redirects a client device to a relevant landing page located at a different uniform resource locator (URL) than the URL included in the content interacted with at a client device. This enables the system to reroute the client device based on the context in which the interaction occurred, rather than simply directing the client device to the location specified in the content with which the interaction occurred.

The processes discussed herein also include the modification/customization of a digital component after a search query is received so that the content of the digital component is more closely aligned to the intent of the search query. To achieve this alignment, the system must perform a large number of similarity determinations in a short period of time. For example, a large content distribution account can include millions or tens of millions of web pages, which is very computationally intensive, as well as time intensive. However, to determine which of the web pages is relevant to a search query, the search query must be known.

Many of the processes discussed herein require the creation of feature vectors (e.g., encodings or embeddings) that are computationally intensive. As such, many of these operations cannot be performed in real time, such as during the time between receipt of a search query and the time at which a response must be sent. Furthermore, the large numbers of search queries received by search systems are in the tens of thousands per second, with the total number of searches occurring per day in the billions, making it difficult to perform many of the operations discussed herein within the time constraints required to respond to a search query and/or with available compute capacity. Furthermore, as previously discussed, the search query is required in order carry out the process of modifying content delivered responsive to the search query and selecting a destination URL for redirecting the client device after interaction with the digital component.

To address the issues discussed above, the present system uses processing strategies and database structures that enable similarity measures to be performed in an efficient fashion during the time between receipt of the search query and the time at which a response to the search query must be sent (e.g., within a second). As discussed in more detail below, the system identifies the URLs associated with a given account (e.g., for a given content distributor), extracts content elements from the landing pages located at the URLs, computes feature vectors for the landing pages, and stores this information together in a database keyed to the account identifier. When a search query is received, the system can use the search query and any other data received with the search query to determine a subset of accounts and account groups having distribution keywords that are matched by the search query, and proceed with further processing of those accounts and account groups.

The identifiers of the accounts can be used to search the database for relevant records, and can use the feature vectors stored in association with each record to compute a dot product (or another appropriate similarity measure) between the stored feature vectors and the newly received search query, which is orders of magnitude faster than having to generate the feature vectors and then generate a similarity measure. As such, the similarity measures between the search query and all relevant candidate landing pages in a fraction of the time it would take to perform all the operations at once. Furthermore, the analysis is more complete, without negatively affecting latency, because a larger corpus of candidates can be considered, thereby resulting in a more exhaustive analysis than would otherwise be possible. In contrast, existing techniques can only manage a similar corpus at the cost of additional latency and using additional computation resources.

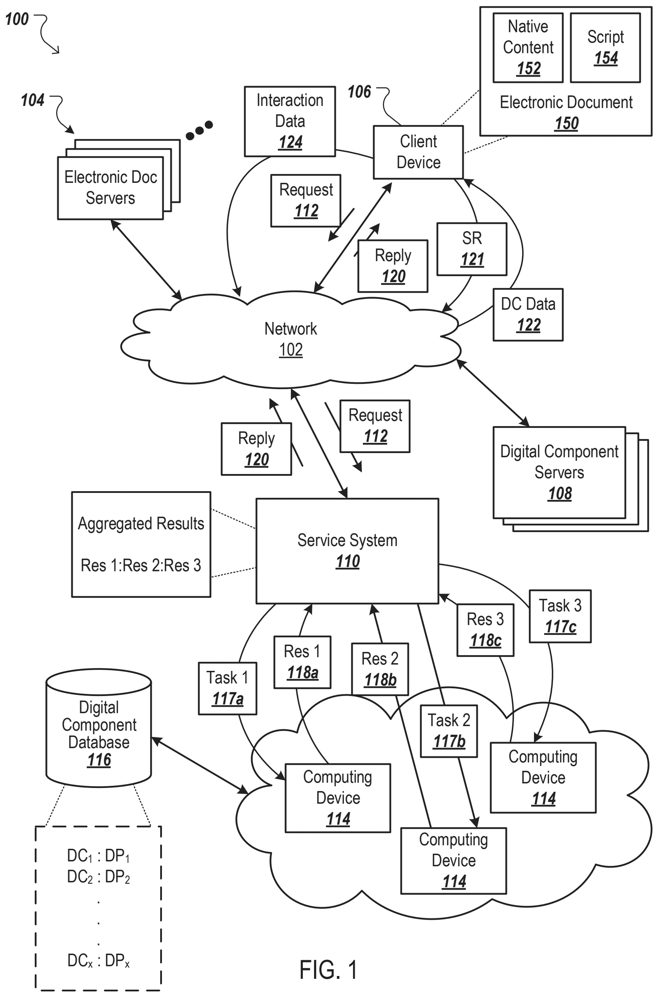

FIG. 1 is a block diagram of an example environment 100 in which of an example environment in content is distributed over one or more networks. The example environment 100 includes a network 102, such as a local area network (LAN), a wide area network (WAN), the Internet, or a combination thereof. The network 102 connects electronic document servers 104, client devices 106, digital component servers 108, and a service system 110. The example environment 100 may include many different electronic document servers 104, client devices 106, and digital component servers 108.

A client device 106 is an electronic device that is capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally. Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app, and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service system 110, or a particular service provided by the service system 110. In these situations, the digital component script is executed by the client device 106 when the given electronic document is processed by the client device 106. Execution of the digital component script configures the client device 106 to generate a request for digital components 112 (referred to as a "component request"), which is transmitted over the network 102 to the service system 110. For example, the digital component script can enable the client device 106 to generate a packetized data request including a header and payload data. The component request 112 can include event data specifying features such as a name (or network location) of a server from which the digital component is being requested, a device identifier corresponding the client device 106, such as a name (or network location, such as an Internet Protocol address) of the requesting device (e.g., the client device 106), a cookie of the service system 110 that was previously placed on the computing device by the service system 110, and/or information that the service system 110 can use to select one or more digital components, or other content, provided in response to the request. In some implementations, the cookie that is included in the component request 112 can be a cookie corresponding to an account of a user that is logged into the service system 110, which is referred to as a service cookie. The component request 112 is transmitted, by the client device 106, over the network 102 (e.g., a telecommunications network) to a server of the service system 110.

The component request 112 can include event data specifying other event features, such as the electronic document being requested and characteristics of locations of the electronic document at which digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service system 110. Similarly, event data specifying keywords associated with the electronic document ("document keywords") or entities (e.g., people, places, or things) that are referenced by the electronic document can also be included in the component request 112 (e.g., as payload data) and provided to the service system 110 to facilitate identification of digital components that are eligible for presentation with the electronic document. The event data can also include a search query that was submitted from the client device 106 to obtain a search results page.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service system 110 chooses digital components (e.g., third-party content, such as video files, audio files, images, text, and combinations thereof, which can all take the form of advertising content or non-advertising content) that will be presented with the given electronic document (e.g., at a location specified by the script 154) in response to receiving the component request 112 and/or using information included in the component request 112.

In some implementations, a digital component is selected in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided.

In some implementations, the service system 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC1-x). The millions of available digital components can be indexed, for example, in a digital component database 116. Each digital component index entry can reference the corresponding digital component and/or include distribution parameters (DP1-DPx) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service system 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service system 110 aggregates the results 118a-118c received from the set of multiple computing devices 114 and uses information associated with the aggregated results to select one or more digital components that will be provided in response to the request 112. For example, the service system 110 can select a set of winning digital components (one or more digital components) based on the outcome of one or more content evaluation processes, as discussed below. In turn, the service system 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106.

In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., besides the native content 152 of the electronic document 150. In some implementations, the digital component is overlayed over (or adjacent to) a portion of the native content 152 of the electronic document 150, and the service system 110 can specify the presentation location within the electronic document 150 in the reply 120.

The digital components that are available for selection and presentation at user devices include a link to a specified URL (e.g., of a landing page), and interaction with the digital component will redirect the client device 106 to the specified URL. In some implementations, the computing device is redirected to a different URL than the URL linked in the digital component by way of dynamic universal resource locator modification that is performed in response to interaction with the digital component at the client device 106. For example, and as discussed in more detail below, interaction with the digital component, which includes a display URL (e.g., example[.]com), can generate interaction data 124 specifying that the interaction with the digital component occurred. The interaction data 124 can be delivered to the service system 110, which can then select a different URL than the display URL, and redirect the computing device to the different URL than the display URL. This can result in the computing device being redirected to a web page (e.g., landing page for the digital component) that contains information that is more relevant to the event data (e.g., a user search query) and/or distribution keywords used to distribute the digital component.

The different URL can be dynamically chosen and used to redirect the client device 106 based, for example, on the event data and distribution keywords. For example, the interaction data 124 can include a search query (or any other event data) that was submitted with the request 112 and/or used to select the digital component for distribution. The interaction data 124 can also include information specifying one or more of an identifier of the digital component with which the interaction occurred, an identifier of an account that contains the digital component, an identifier of a content provider (or another entity) that controls the account containing the digital component. Using some or all of this information, the service system 110 can determine a relevant web page corresponding to the interaction (e.g., that differs from a web page located at the display URL) and select the URL of that relevant web page as the redirect destination of the client device 106. In this way, the client device 106 can be dynamically routed to a more relevant web page based on the context in which the interaction with the digital component occurred.

To facilitate the dynamic modification of the URL to which the client device 106 will be redirected in response to user interaction with a digital component, the service system 110 performs a series of operations to evaluate candidate URLs that are eligible to be used in place of the display URL, generate digital components that are relevant to the content of the candidate URLs, and determine when to perform the dynamic modification following a user interaction with a digital component. These processes are discussed in more detail below.

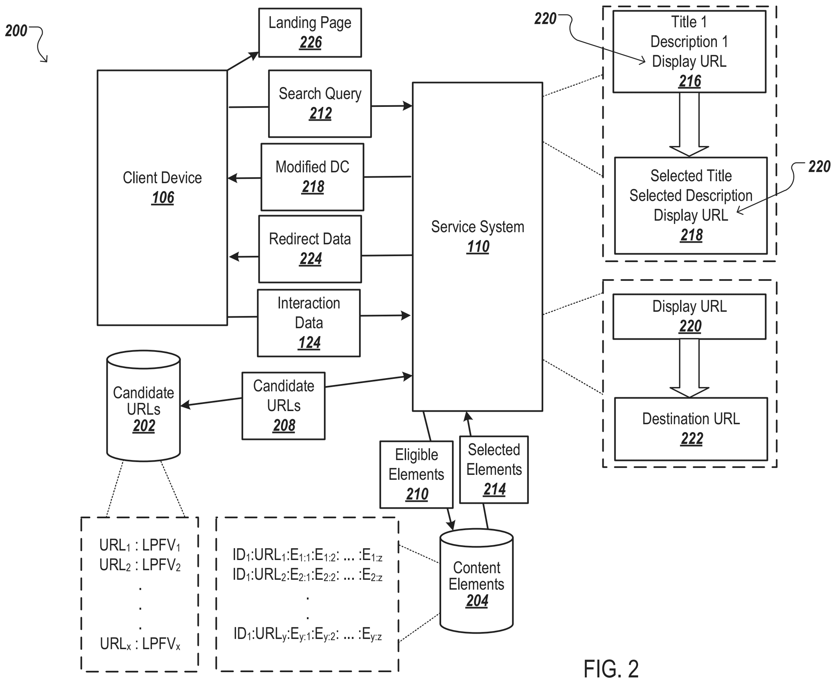

FIG. 2 is a block diagram illustrating a system 200 for implementing dynamic URL modification. The system 200 includes the service system 110, the client device 106, a candidate URLs database 202, and a content elements database 204.

Prior to receiving a search query, the service system 110 can perform various operations to ensure that latency constraints of responding to a search query can be met while still providing the benefits of the dynamic URL modification process. For example, the service system 110 can determine which URLs, from among a set of candidate URLs, are eligible to be final URLs for different sets of digital components in an account (e.g., a content distribution account).

The service system 110 can begin by obtaining a set of candidate URLs 208 to evaluate for the account, or a portion of the account (e.g., account group/content group). In some implementations, the set of candidate URLs 208 can be obtained from the candidate URLs database 202. For example, the set of candidate URLs 208 may have been previously analyzed, classified as candidate URLs, and stored in the candidate URLs database 202 for further processing. In this scenario, the landing pages (e.g., web pages) located at the candidate URLs may have been evaluated to ensure at least a minimum specified level of landing page quality is met for the URL of the landing page to be classified as a candidate URL.

The quality analysis can be performed, for example, independent of any specific search query and/or distribution keyword, and used as an initial filter to reduce the number of URLs for which additional evaluation is performed. In this way, the processing resources expended performing the more in-depth analysis of the landing pages associated with candidate URLs can be limited, thereby enabling the processing to be performed in less time and with fewer computing resources, as compared to performing the in-depth analysis of all landing pages of the account or account group. The particular processing performed to identify the candidate URLs stored in the candidate URLs database 202 is not critical to the presently discussed techniques, and in some cases, the candidate URLs can be the full set of URLs of a given website (e.g., second level domain space).

For each of the candidate URLs 208, the service system 110 can create a landing page feature vector (LPFV) that represents the content of the landing page located at the candidate URL. The feature vector is a numerical representation of a landing page's (i.e., web page's) content, capturing its characteristics in a format that machine learning models, or other applications, can process. It transforms complex, unstructured data (e.g., text, images, metadata) into a structured array of numbers, where each number (or dimension) represents a specific feature or attribute of the page. These features are derived from the page's content, structure, and metadata, enabling quantitative analysis for tasks like ranking, classification, or similarity comparison.

The service system 110 creates the feature vectors by crawling the landing page of a given candidate URL and extracting the text and metadata. The service system 110 tokenizes the text into n-grams and creating key-value pairs of structured data representing the content of the landing page. Using these key-value pairs, the service system 110 can capture the overall semantic meaning of the landing page based on various evaluations, such as term frequency analysis, inverse document frequency analysis, the presence of certain keywords in the document, topics inferred from the text, and metadata associated with the landing page.

These features can be encoded in a numerical vector representing the landing page, which can be stored in the candidate URLs database 202 (or another database) with a mapping to the URL of the landing page. For example, as shown in FIG. 2, the landing page feature vector (LPFV₁) for URL₁ is stored in the URL database 202 and mapped to URL₁. In this way, URL₁ can be used to search the candidate URLs database 202 to retrieve LPFV₁ for further processing.

For each of the candidate URLs 208, the service system 110 can extract content elements from the landing page (e.g., web pages) that are located at the respective candidate URLs 208, and optionally create additional content elements based on the extracted content elements. For example, generative artificial intelligence (AI) models that are part of the service system 110 (or independent of the service system 110) can be used to generate new content elements based on the extracted content elements and/or one or more of the extracted content elements. More specifically, at least a portion of the extracted content elements and/or the landing page as a whole can be input to a generative AI model with a prompt instructing the generative AI model to create content elements that are related to a same topic as the input. The output of the AI model can be a set of generated content elements for the candidate URL corresponding to the landing page.

The service system 110 can then perform analysis on the content elements individually and/or perform analysis on combinations of two or more of the content elements. In some implementations, the service system 110 evaluates the extracted/generated content elements to determine whether each of the content elements (either individually or in combination with other content elements) is eligible to be included in one or more digital components that are included in a given account group (e.g., segment of a content distribution account).

Each account group includes one or more digital components and one or more distribution keywords that control whether the one or more digital components are eligible to be served in response to a received search query. The account groups can also include other distribution parameters that can be used to select which digital component from the account group is distributed in response to receipt of a search query.

The service system 110 can evaluate the content elements based on the content of the landing page, distribution keywords of the account group, and one or more models that are trained to evaluate the quality of content elements. For example, the service system 110 can use the feature vector of the landing page and feature vectors of the content elements (or combinations of content elements) to determine a level of similarity between the content elements and landing page.

For content elements that are generated, for example, using generative AI models, can evaluate the content elements to ensure that they are grounded in the landing page of the candidate URL for which the content elements were generated. For example, the service system 110 can compare the generated content elements to the actual content of the landing page, and determine whether the information conveyed by the generated content elements is found in the landing page either expressly, or necessarily. For example, assume that the generated content element is text reciting "women's blue shoes." In this example, the service system 110 can evaluate the landing page to ensure that the text or images depicted by the landing page includes a reference to women's blue shoes.

When the service system 110 determines that the landing page does not include the information conveyed by the content element, the service system 110 can classify the content element as "not grounded" or "disqualified". This classification means that the content element is disqualified from being used as representative of the landing page corresponding to the candidate URL because the information conveyed by the content element does not accurately reflect the information conveyed by the landing page. When the service system 110 determines that the landing page includes the information conveyed by the content element, the service system 110 can classify the content element as "grounded", meaning that the content element is not disqualified from being used as representative of the landing page corresponding to the candidate URL. In some situations, this classification can conclude the evaluation of the content element, but in other situations, the content element can be required to meet other conditions before being finally deemed/classified as eligible for use in digital components corresponding to the landing page of the candidate URL.

In some implementations, combinations of content elements that are evaluated together include at least headline text and description text. The headline text is generally concise text that appears a top of a digital component and conveys the main concept conveyed by the digital component. The description text is generally positioned lower in the digital component than the headline text, and conveys more details about the topic of the digital component (e.g., providing size, color, or other attributes of an item).

To evaluate combinations of content elements, the service system 110 can generate feature vectors representing each of the content elements individually and/or a feature vector representing the combination of the content elements together. The feature vectors of each of the content elements can be used to individually evaluate the relevance of the content element to the landing page of a candidate URL. The combined feature vector representing the combination of content elements can also, or alternatively, be used to determine the similarity between the combination of content elements and the landing page of the candidate URL (e.g., using the feature vector of the landing page).

In addition to the foregoing, the content elements/combinations of content elements can also be evaluated using the distribution keywords of the account group in a similar manner as that discussed above. For example, the service system 110 can generate a feature vector representing some or all of the distribution keywords that have been specified for a given account group. The keyword feature vector(s) can be used in conjunction with the feature vectors of the content elements/combinations of content elements to determine a similarity between the content elements/combinations of content elements and the distribution keywords of the account group.

The similarity of the landing page feature vector for each candidate URL to the set of distribution keywords for the account group as part of the determination of whether the candidate URL 208 is eligible as a destination URL for digital components that are included in a given account group. For example, for a given candidate URL 208, the service system 110 can require that the similarity between the landing page feature vector of the given candidate URL 208 and the feature vector representing distribution keyword(s) of the account group in order for the candidate URL 208 to be eligible as a destination URL for digital components that are part of the account group (e.g., distributed using the distribution parameters of the account group).

Note that a variety of similarity techniques can be used to determine the relevance between content elements and a landing page of a candidate URL. Some example similarity techniques include dot product similarity, cosine similarity, Jaccard similarity, and Euclidean distance. Additionally, specially trained machine learning systems can be used to evaluate the relevance (or appropriateness) of content elements for a given landing page of a candidate URL and return a score. The particulars of these existing similarity techniques are known and therefore not described in detail in the present specification, but the outputs of these models can be used as "scores" or "values" expressing the relevance and/or appropriateness of using one or more content elements in digital components in an account group.

Based on the evaluations, the service system 110 can determine that one or more content elements (or combinations of content elements) are eligible for inclusion in digital components of an account group (e.g., collection of digital components grouped together in a same account). For example, the service system 110 can assign scores to the content elements/combinations of content elements. In some situations, the service system 110 can assign higher scores to those content elements/combinations of content elements that are more relevant to the landing page of a candidate URL, and assign lower scores to those content elements/combinations of content elements that are less relevant to the landing page of a candidate URL. The service system 110 can then select a subset (e.g., fewer than all) of the content elements to be stored in the content elements database 204. For example, the service system 110 can select those content elements having a score that is higher than a specified minimum score to be stored in the content elements database 204. Alternatively, or additionally, the service system 110 can select a highest scoring number N, or percentage P, of the evaluated content elements/combinations of content elements to be stored in the content elements database 204. Each of the selected content elements/combinations of content elements is deemed an eligible content element (eligible element) 210 for modifying digital components when a search query is received from the client device 106.

The service system 110 stores eligible content elements/combinations of content elements (e.g., one or more content elements) in the content elements database 204. The eligible content elements/combinations of content elements are referred to as eligible elements 210 for brevity. In some implementations, the eligible elements 210 are stored in association with (e.g., mapped/indexed to) the eligible URL (e.g., the candidate URL deemed an eligible URL) corresponding to the eligible elements 210. For example, the eligible elements can be mapped to the eligible URL from which the eligible elements were extracted and/or the eligible URL for which the eligible elements were generated (e.g., using generative AI models applied to content of the landing page at the eligible URL). This mapping enables searching various dimensions of the content elements database 204 for data corresponding to the searched data dimension.

In some implementations, each record/entry of the content elements database 204 can include an identifier corresponding to an account (e.g., content distribution account) or account group for which the record/entry was generated. For example, assume that the first record was generated for an account (or account group) having the identifier ID₁. In this example, the records including ID₁ can specify the eligible URLs (e.g., candidate URLs that were deemed eligible to be destination URLs) for the account and/or account group identified by ID₁. As shown in FIG. 2, the eligible URLs would include URL₁, URL₂, ... URL_{y}, meaning that any of these URLs can be used as destination URLs for digital components in the account/account group represented by ID₁.

Each of the records can also include the content elements that were deemed eligible to be used for modifying the digital components of the account/account group represented by ID₁. For example, as shown in FIG. 2, the eligible elements 210 E_{1:1}, E_{1:2} ... E_{1:z} are in the data record that includes ID₁ and URL₁. As such, the listed eligible elements 210 are the content elements extracted from/generated for the landing page at URL₁, and are eligible for modifying digital components in the account/account group corresponding to ID₁.

When the client device 106 submits a search query 212 to the service system 110, the service system 110 can select a digital component to be provided in response to the search query (e.g., for presentation in a search results page) in a manner similar to that discussed above with reference to FIG. 1. For example, among other operations, the service system 110 can select a given digital component for distribution based on the search query 212 matching a distribution keyword used to distribute the given digital component. As previously discussed, the given digital component may be part of a specific account or account group that uses a set of one or more distribution keywords that must be matched in order for the given digital component to be distributed. When the service system 110 determines that the search query 212 matches the distribution keyword that conditions distribution of the given digital component, the given digital component can be selected for distribution, and the service system 110 can identify the account/account group identifier corresponding to the selected digital component. For purposes of example, assume that the selected digital component is part of the account/account group represented by ID₁.

Using ID₁, the service system 110 can select eligible elements, referred to as selected elements 214, that can be used to create a modified digital component. For example, the service system 110 can use ID₁ to search for records that in the content elements database 204 that include ID₁. Once the records corresponding to ID₁ are identified, the service system 110 can determine a similarity between the search query 212 and/or information received with the search query 212 to determine which eligible elements 210 are selected to be selected elements 214 used to create the modified digital component.

In some implementations, the determination includes computation of a similarity measure between the search query (and/or any corresponding data) and information from the records corresponding to the account/account group identifier (e.g., ID₁). For example, a similarity measure between a query vector representing the search query 211 (and potentially other signals, such as search history information) and a feature vector representing each of the records of the content elements database 204 can be computed, thereby providing similarity measurements for each of the available records for ID₁. In some situations, the similarity measures can be computed using each entire record. In other situations, similarity measures can be computed using less than all of the information included in a particular record. For example, the similarity measures can be generated using the feature vector of the URL in the record, feature vectors representing the eligible elements 210 in the record, or both. The result of the evaluation provides similarity measures for each of the records, which can be used to determine which of the eligible elements 210 will be picked as the selected elements used to create the modified digital component. For example, the eligible elements 210 corresponding to the record having the highest similarity can be picked as the selected elements 214, and used to modify the already selected digital component.

The service system 110 can use the selected elements 214 to modify the selected digital component in a number of ways. For example, assume that the selected digital component 216 (e.g., selected as discussed with reference to FIG. 1) includes "Title " and "Description", which can either be placeholders to be populated with other content prior to serving, or designated text that is eligible for replacement prior to serving. In either case, the service system 110 can create a modified digital component by replacing "Title" with a "Selected Title," and replacing "Description" with a "Selected Description". In this example, the "Selected Title" and "Selected Description" are text from the selected elements 214 that are used to populate the selected digital component 216. The inclusion of the selected elements 214 in the selected digital component 216 results in the creation of the modified digital component 218. Once created, the service system 110 can distribute (e.g., transmit) the modified digital component (Modified DC) 218 to the client device as a response to the search query.

Note that the digital component 216 and the modified DC 218 each include the same display URL 220. In some implementations, the modification of the digital component 216 does not include a modification to the display URL 220. The display URL 220 is a URL that is specified by the administrator of the account/account group that includes the digital component 216. In some implementations, the display URL 220 is specified at an account group level (or account level), such that all digital components in the account group (or account) will include the same display URL 220 when transmitted to the client device 106. As discussed in more detail below, the service system 110 can redirect the client device 106 to a different URL than the display URL 220 after interaction with the modified DC 218.

Interaction with the modified DC 218 at the client device 106 causes interaction data 124 to be generated and submitted to the service system 210. The interaction data 124 can include information such as an identifier representing the modified DC 218, the account/account group identifier (e.g., ID₁), and enables the service system 110 to detect that interaction with the modified DC 218 occurred at the client device 106. In some implementations, the interaction data 124 can include the search query 212 (or any other event data) that was submitted with the request 112 and/or used to select the digital component for distribution.

The service system 110 can use the interaction data 124 to determine a destination URL 222 to which the service system 110 will redirect the user device 106 instead of redirecting the client device 106 to the display URL 220. Generally speaking, the purpose of redirecting the client device 106 to a different URL than the display URL 220 is to redirect the client device 106 to a landing page (e.g., web page) that includes information more specifically tailored to (e.g., relevant to) the specific search query 212 and/or context in which the search query 212 is received and the modified DC 218.

For example, in determining the destination URL 222 to which the client device will be redirected, the service system 110 can consider the search query 212, the query vector of the search query 212, a search history of the client device 106, and/or a geographic location of the client device 106. More specifically, the service system 110 can determine a similarity measure between one or more feature vectors generated using any of the search query 212, the query vector of the search query 212, a search history of the client device 106, and/or a geographic location of the client device 106 and each feature vector of candidate URLs. The service system 110 can then select the candidate URL having the highest similarity as the destination URL 222.

In some implementations, the service system 110 can use the URL that is included in the record containing the selected elements 214 that were used to create the modified DC 218. For example, assume that the content elements E_{1,1} and E_{1,2} were chosen as the selected elements 214, and used to generate the modified DC 218. In this example, the service system 110 could maintain an association between URL₁ and the modified DC 218. When the interaction data 124 is received, the service system 110 can use that maintained association to select URL₁ as the destination URL 222 for the modified DC 218.

In some implementations, the service system 110 can use the account/account group identifier and/or at least one of the selected elements 214 of the modified DC 218 to select the destination URL 222 for the modified DC 218. For example, assume that the selected elements 214 are both mapped to URL₁ and URL₂ in the content elements database 204. In this example, the service system 110 can use the selected elements 214 to search the content elements database 204 to identify URLs that are mapped to one or both of the content elements and the account/account group identifier ID₁ corresponding to the digital component 216. The service system 110 can then evaluate each of the URLs to determine which of the URLs to select as the destination URL 222. For example, the service system 110 can determine the similarities between the landing page for each URL (e.g., using the LPFVs for the URLs) and the search query and/or other information available to the service system 110 after the interaction with the modified DC 218. In this example, the service system 110 can select the URL of the landing page having the highest similarity measure as the destination URL 222 for the modified DC 218.

The service system generates redirect data 224 based on the destination URL 222 selected for the modified DC 218. The redirect data 224 includes commands/instructions that cause the client device 106 to navigate to the landing page 226 that is located at the destination URL 222.

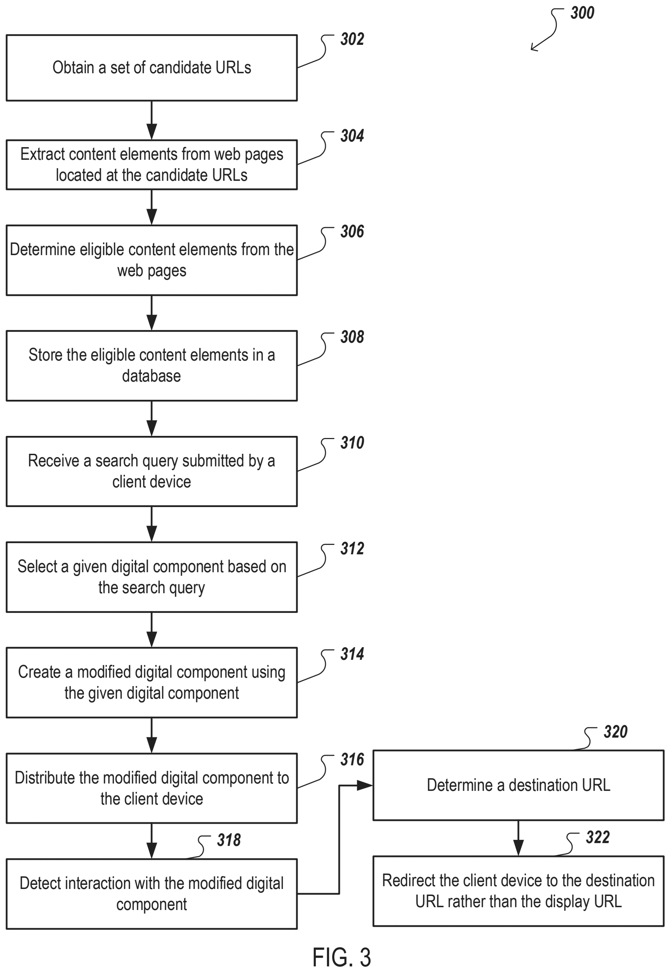

FIG. 3 is a flow chart of an example process 300 for dynamic URL modification. Operations of the process 300 can be performed by one or more systems that include one or more computing devices. Operations of the process 300 can be implemented as instructions stored on one or more non-transitory computer readable medium, and execution of the instructions can cause specially configured and/or programmed circuitry to perform operations of the process 300.

A set of candidate uniform resource locators (URLs) is obtained (302). In some implementations, the set of candidate URLs includes URLs of web pages included in a same second level domain as a display URL. The display URL is a URL that is pre-specified for one or more of a given digital component, a given account group, or a given account. For example, assume that the display URL is example[.]com, and is specified by an administrator of a given content distribution account. In this example, the administrator may input the display URL into the account interface, and pre-assign it as the display URL for a single digital component, a group of digital components that are in a same account group (e.g., a sub-portion of an account), or for all digital components in the account. This pre-assignment of the display URL designates the display URL as the URL that will be included in the digital components corresponding to the assignment. Continuing with this example, the candidate URLs can be URLs of web pages that share the same second level domain example[.]com. Example[.]com/shoes, example[.]com/shoes/women, and example[.]com/shoes/women/hiking books are all examples of candidate URLs that share the second level domain example[.]com.

In some implementations, one or more of the digital components includes variable content that is modified prior to distribution to a client device. The variable content that is modified prior to the distribution of the client device can be content other than the display URL. For example, as discussed throughout this document, the variable content can be a title/headline of the digital component, a description of the digital component, or other textual content presented within the digital component.

Content elements are extracted from web pages located at the candidate URLs (304). In some implementations, the content elements can be extracted by parsing the landing page (e.g., web page) of each given candidate URL among the set of candidate URLs obtained. The system can tokenize the content of a given landing page and store the tokenized content as the content elements for the given candidate URL. The extraction is previously discussed in more detail, and that description is not repeated here for brevity.

In some implementations, the extraction of the content elements can also include the generation of additional content elements. For example, a generative AI system can be used to evaluate the given landing page for a given candidate URL, and generate content elements based on the content of the given landing page, as previously discussed.

Eligible content elements from the web pages are determined (306). In some implementations, a set of eligible content elements are determined for each given candidate URL. The set of eligible content elements constitutes those content elements that are eligible for inclusion in one or more digital components (including a given digital component). In some implementations, multiple different candidate content elements can be identified for a given web page. In these implementations, the different candidate content elements can be considered individually and/or different combinations of the different candidate content elements can be created and evaluated together as a combination of content elements. For example, a combination of content elements can include a given title (e.g., "Women's Hiking Boots") and a given description (e.g., "Hike all day in these stylish, comfortable, and rugged boots"), which can be evaluated together as a combination of content elements.

The determination of which content elements are eligible content elements can be based on an evaluation of the content elements. In some implementations, the evaluation of the content elements can include a determination of a relevance and/or similarity between the content elements and the corresponding web page used to extract/generate the content elements. For example, as previously discussed, a feature vector of the given URL can be obtained to determine the relevance/similarity. The feature vector of the given URL can represent the content of the landing page at the location of the given URL. A similarity measure can be generated based on the similarity evaluation between each content element and the feature vector of the given URL. In the case of the combinations of candidate content elements being evaluated, each combination among the different combinations of different candidate content elements can be evaluated with respect to the feature vector of the given URL. The similarity measures for the different candidate content elements/combinations of candidate content elements provides a basis for determining which candidate content elements/combinations of candidate content elements are most relevant to the landing page located at the given URL.

A proper subset (e.g., less than all) of the content elements/combinations of content elements are selected as eligible content elements. For example, content elements/combinations of content elements having the highest similarity scores relative to the feature vector of the given URL can be selected as eligible content elements. In the case of individual content elements, being selected as an eligible content element qualifies the content element to be used to modify a digital component. In the case of a combination of content elements, being selected as an eligible content element qualifies the two or more content elements of the combination to be used to modify a digital component, and therefore, be included together in a same modified digital component. The evaluation and selection of eligible content elements is discussed in more detail reference to FIG. 2.

One or more eligible content elements are stored in a database (308). In some implementations, the content elements stored in the database are eligible for inclusion in one or more digital components (e.g., a given digital component) based on the evaluations previously discussed. The content elements/combinations of content elements can be stored in the database with an account identifier of an account for which the digital components (e.g., given digital component) is distributed. For example, as previously discussed, the identifier can specify an account, account group, and/or individual digital component for which the content element is considered an eligible content element. The storage of the content elements/combinations of content elements is discussed in detail with reference to FIG. 2.

The operations 302-308 can be performed prior to the receipt of a specific search query. As such, these operations are considered to be performed "offline" because these operations are not being performed to respond to an individual query that has been received from a client device. These operations can be performed on a periodic basis. For example, these operations can be triggered when there is a change to a content distribution account. In this way, the stored eligible content elements and corresponding candidate URLs can be kept up to date without constantly performing these operations. Alternatively, or additionally, these operations can be performed to ensure that newly added URLs are considered as candidate URLs. Each iteration of these operations is considered to be "offline" operations because each iteration is performed independent of the receipt of any search query. In contrast, operations that are performed to respond to a specific received search query are considered to be "online" operations.

After storing the content elements (e.g., the one or more content elements) in the database, a search query submitted by a client device is received (310), and a given digital component is selected for distribution based on the search query (312). The selection of a digital component is discussed in detail with reference to FIGs. 1 and 2. The given digital component is generally selected, at least in part, based on the search query matching a distribution keyword used to distribute the given digital component. That is, distribution of the given digital component can be conditioned on the match between the search query and the distribution keyword.

In some implementations, the selection of the given digital component be based on the identification of an account group having one or more distribution keywords that matched by the search query. For example, assume that a set of digital components are grouped together in an account group, and a set of distribution keywords are assigned to the account group. In this example, the match of the search query to one or more of the distribution keywords in the set can be identified, and this match can qualify a digital component from the account group for distribution, such that a given digital component from that account group can be selected for distribution (e.g., based on other selection criteria). As previously discussed, the given digital component can include variable content that can be modified.

A modified digital component is created using the given digital component (314). In some implementations, the modified digital component includes at least one content element that was stored in the database and that was not already included in the given digital component. The modified digital component can also include the display URL that was pre-specified for inclusion in the digital component. That is, the modification of the digital component does not modify the display URL.

In some implementations, the modification of the given digital component is performed based on the selection of a given eligible combination of content elements using the search query and an account group identifier. The account group identifier can be, for example, the identifier for the account group having the distribution keyword that was matched by the search query. The database can be searched using the account group identifier to obtain a set of database records that include the account group identifier, thereby narrowing the analysis needed to be performed on the records of the database. Once the records that include the account group identifier are obtained, the search query can be used to select the specific set of content elements (e.g., combinations of content elements or individual content elements) to evaluate using the search query.

The evaluation of the records can include a determination of relevance/similarity between the search query and, for each of the records, one or more of a feature vector of the landing page for the URL included in the record and/or the content elements included in the record. In this way, the search query can be used to further select the specific content elements that are sufficiently (e.g., most) relevant to the query so that the resulting modified digital component is relevant to the search query. When a combination of content elements is selected, the modification of the digital component includes using the combination of content elements to change the content of the digital component (e.g., inserting the combination of content elements into the digital component). In some implementations, the modification can include modifying a text headline and text description of the given digital component.

The modified digital component is distributed to the client device as a response to the search query (316). In some implementations, the modified digital component includes the display URL that was pre-specified for the digital component.

Interaction with the modified digital component is detected (318). In some implementations, the interaction is detected based on interaction data received from the client device, as discussed above with reference to FIG. 2.

A destination URL is determined (320). In some implementations, the destination URL differs from the display URL that was included in the modified digital component. The destination URL can be determined, at least in part, based on the interaction data as discussed above with reference to FIG. 2. In some implementations, the determination of the destination URL includes detecting, e.g., within the interaction data, data specifying one or more of an account identifier (or account group identifier) or the at least one content element of the modified digital component. The content elements database can be searched using the one or more of the account identifier or the at least one content element of the modified digital component to identify matching records. A given URL that is keyed to the one or more of the account identifier or the at least one content element of the modified digital component can be selected as the destination URL. In some implementations, a similarity measure between the feature vector the given URL and a query vector representing the search query. In these implementations, the selection of the given URL is based on at least the similarity measure between the feature vector of the given URL and the query vector. The selection of the destination URL is discussed in more detail with reference to FIG. 2.

The client device is redirected to the destination URL rather than the display URL (322). As previously discussed, instructions can be sent to the client device that cause the client device to navigate to the landing page located at the destination URL.

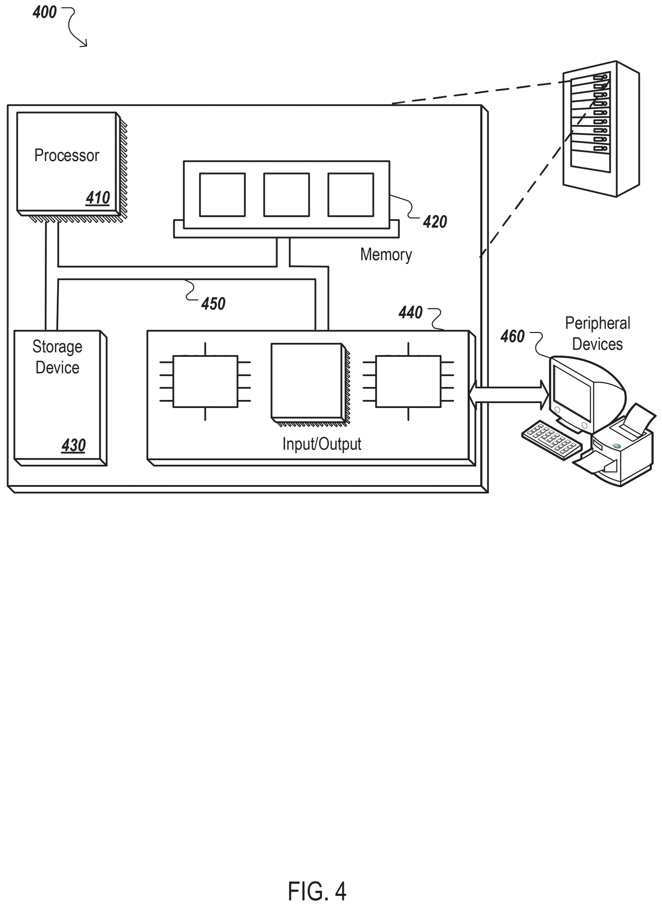

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 400. In one implementation, the input/output device 440 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to other peripheral devices, e.g., keyboard, printer and display devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1. A method, comprising:
obtaining, by a service system including one or more hardware processors, a set of candidate uniform resource locators of web pages included in a same second level domain as a display uniform resource locator (URL) that is pre-specified for a given digital component, wherein the given digital component includes variable content that is capable of being modified prior to distribution to a client device;
extracting, by the service system, content elements from a given web page located at a given candidate uniform resource locator among the set of candidate uniform resource locators;
determining, by the service system and based on an evaluation of the content elements, one or more of the content elements corresponding to the given web page that are eligible for inclusion in the given digital component;
storing, by the service system, the one or more content elements that are eligible for inclusion in the given digital component based on the evaluation in a content elements database with an account identifier of an account for which the given digital component is distributed;
after storing the one or more content elements in the content elements database:
receiving, by the service system, a search query submitted by a client device;
selecting, by the service system, the given digital component for distribution based on the search query matching a distribution keyword used to distribute the given digital component;
creating, by the service system, a modified digital component using the given digital component, wherein the modified digital component includes:
at least one content element from the elements database that was not already included in the given digital component; and
the display URL; and
distributing the modified digital component to the client device as a response to the search query.

2. The method of claim 1, further comprising:
detecting interaction with the modified digital component based on interaction data received from the client device;
determining a destination URL that differs from the display URL included in the modified digital component based at least in part on the interaction data;
redirecting the client device to the destination URL rather than the display URL.

3. The method of claim 2, wherein determining the destination URL comprises:
detecting data specifying one or more of the account identifier or the at least one content element of the modified digital component;
searching the content elements database using the one or more of the account identifier or the at least one content element of the modified digital component; and
selecting, as the destination URL, a given URL that is keyed to the one or more of the account identifier and the at least one content element of the modified digital component.

4. The method of claim 3, further comprising:
prior to receiving the search query submitted by the client device, obtaining a feature vector of the given URL;
after receiving the search query submitted by the client device, computing a similarity measure between the feature vector of the given URL and a query vector representing the search query, wherein selecting the given URL is based on at least the similarity measure between the feature vector of the given URL and the query vector.

5. The method of claim 4, further comprising:
identifying multiple different candidate content elements from the given web page;
creating different combinations of the different candidate content elements from the given web page;
evaluating a relevance of each of the different combinations of the different candidate content elements to the given web page as a whole based on a combination feature vector;
selecting a proper subset of the different combinations as eligible combinations of content elements that are eligible to be included together in a same modified digital component; and
storing the eligible combinations of content elements in the elements database with the account identifier of the account.

6. The method of claim 5, further comprising:
after receiving the search query:
identifying an account group having one or more distribution keywords matching the search query; and
selecting a given eligible combination of content elements based on the search query and an account group identifier, wherein creating the modified digital component comprises modifying the given digital component using the combination of content elements.

7. The method of claim 6, wherein creating the modified digital component comprises using the combination of content elements to modify a text headline and text description of the given digital component.

8. A non-transitory computer readable medium storing instructions that, upon execution by one or more data processing apparatus of a service system, cause the one or more data processing apparatus to perform operations comprising a method according to any preceding claim.

9. A system, comprising:
one or more memory devices; and
one or more data processing apparatus, including processing circuitry, configured to access the one or more memory devices and execute instructions that cause the one or more data processing apparatus to perform operations comprising a method according to any preceding claim..
